Europäisches Patentamt

European Patent Office

Office européen des brevets

(11) Publication number: **0 047 800**

**A2**

(12)

# EUROPEAN PATENT APPLICATION

(21) Application number: **80105572.4**

(22) Date of filing: **17.09.80**

(51) Int. Cl.³: **G 02 B 27/02**

(43) Date of publication of application:
24.03.82 Bulletin 82/12

(84) Designated Contracting States:
AT BE CH DE FR GB IT LI NL SE

(71) Applicant: Sheiman, David M.
1401 Alvarado Terrace
Los Angeles California(US)

(71) Applicant: Rudell, Elliot A.
2422 Curtis Avenue
Redondo Beach California(US)

(72) Inventor: Sheiman, David M.
1401 Alvarado Terrace
Los Angeles California(US)

(72) Inventor: Rudell, Elliot A.
2422 Curtis Avenue
Redondo Beach California(US)

(74) Representative: Wagner, Karl H., Dipl.-Ing.
P.O. Box 22 02 46 Gewuerzmuehlstrasse 5
D-8000 München 22(DE)

(54) Stereoscopic viewing and projection system.

(57) The invention is a stereoscopic viewing system which uses a thin prism, which has a plano face with a plurality of straight and parallel V-grooves on its opposite face, alone, or in combination with a second thin or solid prism to view a pair of stereoscopic images. The preferred system also includes an image projection or viewing system which includes one or more mirrors to permit display of left and right stereoscopic images in their normal and unreversed orientation to each other.

EP 0 047 800 A2

-1-

STEREOSCOPIC VIEWING AND PROJECTION SYSTEM

FIELD OF THE INVENTION

This invention relates to a system for the display, projection and viewing of stereoscopic images.

BACKGROUND

Various techniques have been employed for stereoscopic display and observation of optical images including handheld viewers in which a separately imaged view of the object is mechanically directed to each of the eyes and, more recently, stereoscopic projection systems employing projectors for directing stereoscopic, image-modulated, parallel beams of polarized light onto a screen viewed by observers wearing special eyeglasses having oculars of polarizing material oriented to different planes and effective only to transmit light from its respective image-modulated, polarized light beam.

An ancient patent, U.S. Patent 51906 of January 2, 1866, discloses a stereoscopic viewing assembly of a massive pair of prisms. This device, while operable, is not practical because of the size and bulk of the device, with a consequential high cost of manufacture, and because

- 2 -

the assembly requires backlighted images, e.g., transparencies.

British patent 711367 of 1954 by Wilson and Silver discloses an improved projection means for the abovementioned 1866 patent. Although this patent avoided the use of transparencies, it did not overcome the inherent costs and clumsiness of the 1866 Swan prism system.

BRIEF STATEMENT OF THE INVENTION

The invention comprises a stereoscopic viewing system utilizing one or a pair of prisms to direct the line of sight from each eye to a respective one of one or two thin prisms having a plano face and an opposite, V-grooved face in which a plurality of parallel and longitudinal V-grooves define a plurality of parallel, longitudinal triangular prisms. It also comprises a combination of reflecting and reducing or magnification means to project a pair of stereoscopic images in their natural, i.e., left-right original orientation, onto two imaging surfaces of the viewing system.

This invention, in permitting the natural, i.e. unreversed side-to-side orientation of the stereoscopic images, allows, for the first time, the employment of unaltered stereoscopic pairs of pictures, and allows for the visual recording of new stereoscopic images without reversing or flopping the images. For purposes of this application, the term "reversing of images" means the

0047800

-3-

positioning of the left image to the right side of the right image (normally, the right image should be on the right, the left image on the left). For purposes of this application, "flopping" means the display of a particular image in backwards orientation, i.e., a mirrored image.

This invention therefore, allows for unaltered employment of the vast library of existing stereoscopic information, the employment of unaltered instant stereoscopic image pairs, and greatly facilitates picture handling in preparation for display within the system by the user.

In the two prism embodiment, a pair of thin and grooved viewing prisms are positioned with their plano surfaces in a back-to-back array and their grooved surfaces facing outwardly. Each V-grooved surface, which provides a plurality of parallel, spaced-apart prisms, is positioned between one of the stereoscopic images and the viewer's respective eye. The stereo effect is achieved since the slight convergence of sight from the viewer's eyes permits an incident angle of view from one eye which is within the angle for complete internal reflection of the prisms, permitting the view to be directed toward one of the pair of images, while the view from the other eye is outside the angle for complete internal reflection and is refracted through the prisms and directed to the other of the stereoscopic images. The system, therefore, does not

-4-

require the viewer to wear any special eye pieces or filters.

BRIEF DESCRIPTION OF THE DRAWINGS

The invention will be described with reference to the Figures of which:

FIGURE 1 illustrates a one prism system requiring reversed images with one image flopped.

FIGURE 2 is an enlarged view of a portion of FIGURE 1, illustrating the lines of sight of the viewer.

FIGURE 3 illustrates a two prism system requiring reversed images with one image flopped.

FIGURE 4 is a perspective view of FIGURE 3.

FIGURE 5 illustrates a two prism array, with corrected left/right non-reversed image display employing reflective means.

FIGURE 6 illustrates the addition of a magnification lens to corrrect for image size variance in the FIGURE 5 system.

FIGURE 7 illustrates the invention of FIGURE 6 with the substitution of one solid prism for one thin V-grooved prism.

FIGURE 8 illustrates a variation of a two prism system for non-flopped images.

FIGURE 9 illustrates the FIGURE 8 embodiment with one thin grooved prism and one solid prism.

FIGURE 10 illustrates the FIGURE 9 embodiment with the

- 5 -

reversal of position of the solid prism and the thin grooved prism array.

FIGURE 11 illustrates the system of FIGURE 8 employing only one prism.

FIGURE 12 illustrates a projection display system for use with a two prism array.

FIGURE 13 illustrates the projection display of FIGURE 12 with only one thin grooved prism.

FIGURE 14 illustrates the system of FIGURE 13 with a solid prism.

FIGURE 15 illustrates a display system similar to FIGURE 12 for non-projected remote images.

FIGURE 16 illustrates a standard pair of stereoscopic images.

FIGURE 17 illustrates a reversed stereoscopic image pair.

FIGURE 18 illustrates a reversed stereoscopic image pair with one image flopped.

DESCRIPTION OF PREFERRED EMBODIMENTS

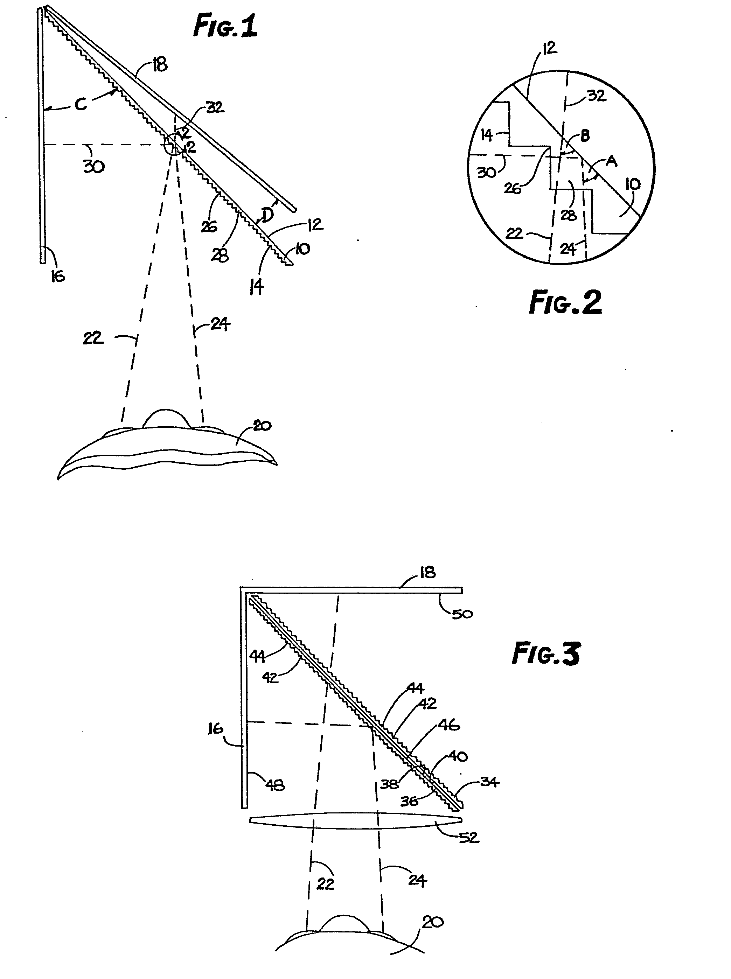

Referring to FIGURES 1 and 2, a simple, one prism system requiring reversed (and flopped) images, is illustrated. A prism 10 is provided having a flat or plano surface 12 and an opposite grooved face 14. The prism is mounted with one edge coextensive with and intersecting the edges of imaging planes 16 and 18 which provide for imaging of right and left views of a stereoscopic pair of images.

Prism 10 has its surface 14 provided with a plurality of longitudinal V-grooves 26 that define therebetween a plurality of parallel, longitudinal, triangular prisms 28. Preferably, prisms 28 are disposed in regular and equal spacing across the surface 14. The stereoscopic display is observed by viewer 20, whose lines of sight are directed onto the grooved surface 14 of the prism 10. The lines of sight of the viewer are shown in broken lines 22 and 24 for the left and right eyes, respectively.

The observer can assume a position with regard to the prism 10 whereby the line of sight 24 from the right eye has an incident angle A (see FIGURE 2) with regard to prism 10 which is below the angle for complete internal reflection whereby this line of sight is internally reflected by the plano surface 12 of the lens and exits from the prism along line 30. The line of sight from the opposite eye, broken line 22, however, has an angle B greater than the angle for complete internal reflection and this line of sight is refracted within the prism 10 and exits therefrom along the direction 32.

Referring now to FIGURE 1, the line of sight 30 is directed to the right stereoscopic image which is displayed on imaging plane 16 while line of sight 32 is directed to the left stereoscopic image which is displayed on imaging plane 18.

Since line of sight 24 is totally internally reflected

- Y -

within prism 10, the imaging plane 16 will be observed by viewer 20 in a flopped manner, i.e., as a mirror image. To correct for this reversal of image orientation, it is necessary for the right stereoscopic view 17 that is positioned on imaging plane 16, to be flopped.

The relative occluded angles of the imaging surfaces with respect to the grooved prism are selected to minimize prism distortion in the single prism system. For this purpose, angle C which is the occluded angle between the grooved surface 14 of prism 10 and the facing imaging plane 16, should be from about 40 degrees to about 60 degrees while angle D, the occluded angle between the plano surface 12 of prism 10 and the facing imaging plane 18, should be from about 1 degree to about 15 degrees.

Referring now to FIGURE 3, there is illustrated a two prism embodiment of the stereoscopic system. A pair of thin prisms 34 and 36 are positioned with their plano surfaces 38 and 40 in a back-to-back continuous array. Each thin prism is of the shape previously described with regard to thin prism 10 of FIGURES 1 and 2, and each thin prism has its outer face grooved with a plurality of longitudinal V-grooves 42 which define a plurality of longitudinal, regularly and equally-spaced triangular prisms 44 therebetween. The plano surfaces 38 and 40 of the prisms can be separated by a thin gap 46. If desired, however, these surfaces can be in contact and the stereoscopic effect will still be achieved.

The pair of stereoscopic images 48 and 50 are mounted on the right and left stereoscopic imaging planes 16 and 18 in any suitable fashion. These images can be opaque prints of stereoscopic views or can be transparencies or focused projections from a remote transparency or motion film projector. Image 48 must be a flopped image in order to appear to viewer 20 in correct orientation, for reasons as described with line of sight 24 in FIGURES 1 and 2. In the embodiment of FIGURE 3, a magnification lens 52 can be situated between the viewer 20 and the system. This lens widens the field of effective stereoscopic viewing and enlarges the apparent image size.

Lines of sight 22 and 24 from viewer 20 pass through magnification lens 52 and enter prism 36. Due to the slight convergence of sight from the viewer's eyes, the incident angle of views from the viewer's eyes are different as they enter prism 36, and this difference renders the incident angle of the right line of sight 24 sufficient to undergo total internal reflection, while that of the left line of sight 22 is insufficient to effect such internal reflection. Line of sight 22, therefore, is refracted through prism 36, through air gap 40, through prism 34 and towards left stereoscopic image 50. Right line of sight 24 is totally internally reflected in prism array 36 and is directed toward right image 48.

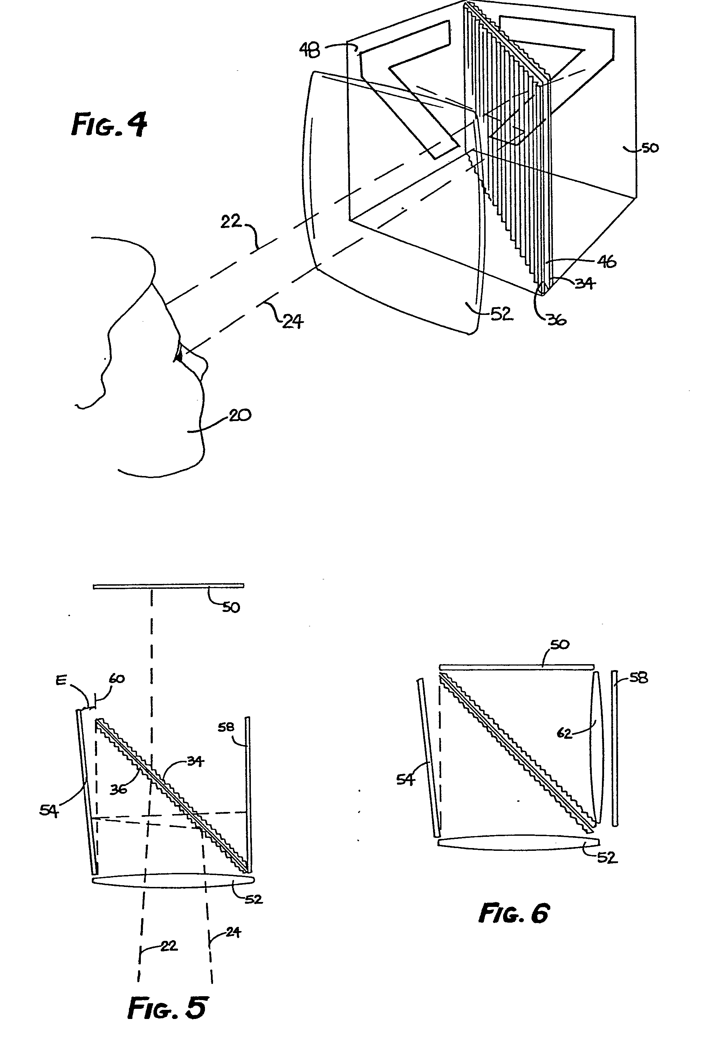

FIGURE 4 illustrates a perspective view of the stereoscopic system described in FIGURE 3. It can be clearly noted in this view that stereoscopic image 48 is necessarily flopped, in order to appear in a correct orientation to viewer 20. Stereoscopic image 50 is not flopped. It can be observed in FIGURE 4 that the stereoscopic images 48 and 50 are necessarily positioned in a reversed order, that is, left image to the right of the right image, in order for the correct image to be viewed by its respective line of sight through the system.

FIGURE 5 illustrates a solution to the reversing and flopping inconvenience since left image 50 and right image 58 are in their correct orientation, unreversed and unflopped. Reflective means 54, such as a mirror, is positioned at an angle E of approximately 1 degree to 15 degrees, preferably 10 degrees, beyond imaginary plane 60, which is perpendicular to image 50 and approximately 45 degrees to prisms 34 and 36. Left line of sight 22 travels through magnification lens 52 to stereo image 50, behaving in a manner similar to as described in FIGURE 4. Right line of sight 24 undergoes total internal reflection in prism 36 (as described earlier) and is directed onto reflective means 54. Line of sight 24 is now reflected back into prism 36. The slight angle E of reflective means 54 alters the incident angle of reflected line of sight 24 so that it intersects prism 36 at an angle insufficient to once again realize total internal reflection. It is therefore refracted and directed through prism 34 and towards image 58. Left image 50 is positioned a distance from prisms 34 and 36 to provide equal distances of travel of line of sight 22 and line of sight 24. Since both lines of sight are of equal length, the viewer sees a correctly sized stereo image utilizing normal (non-reversed annd non-flopped) images 50 and 58.

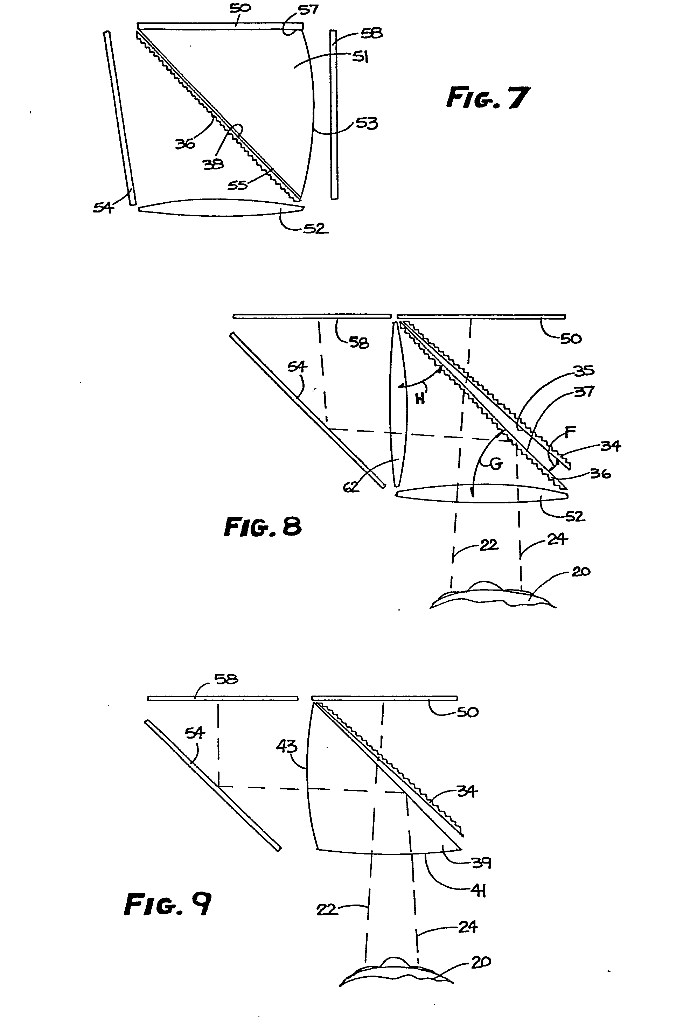

FIGURE 6 illustrates the system of FIGURE 5, except with the inclusion of magnification lens 62 to enlarge image 58. This magnification negates the requirement of spacing image 50 apart from the prisms to compensate for differences in the lengths of the lines of sight. Lens 62 thus allows for a compact assembly of the invention. Alternatively, a reduction lens could be employed in front of image 50 in substitution for magnification lens in front of image 58.

FIGURE 7 illustrates the system of FIGURE 6, with the substitution of solid prism 51 for thin grooved prism 34 of FIGURE 6. Prism 51, of any suitable clear optical material such as acrylic or quartz, is positioned so that its hypotenuse side 55 is parallel to plano surface 38 of prism array 36. Short side 57 is butted against left imaging surface 50, providing correct spacing and an alignment surface for the left image. Short side 53 of the prism 51 is shown in a convex form. This provides integral magnification, eliminating lens 62 of FIGURE 6. The use of a solid prism 51 and a thin grooved prism 36 provide a cost and weight effective arrangement over two solid prisms. More importantly, in an optical arrangement such as described in FIGURES 5, 6, and 7, the repeated travel of lines of sight through the optical elements can effectively be maintained at a higher optical quality by the employment of the one solid prism 51 and one prism array 36.

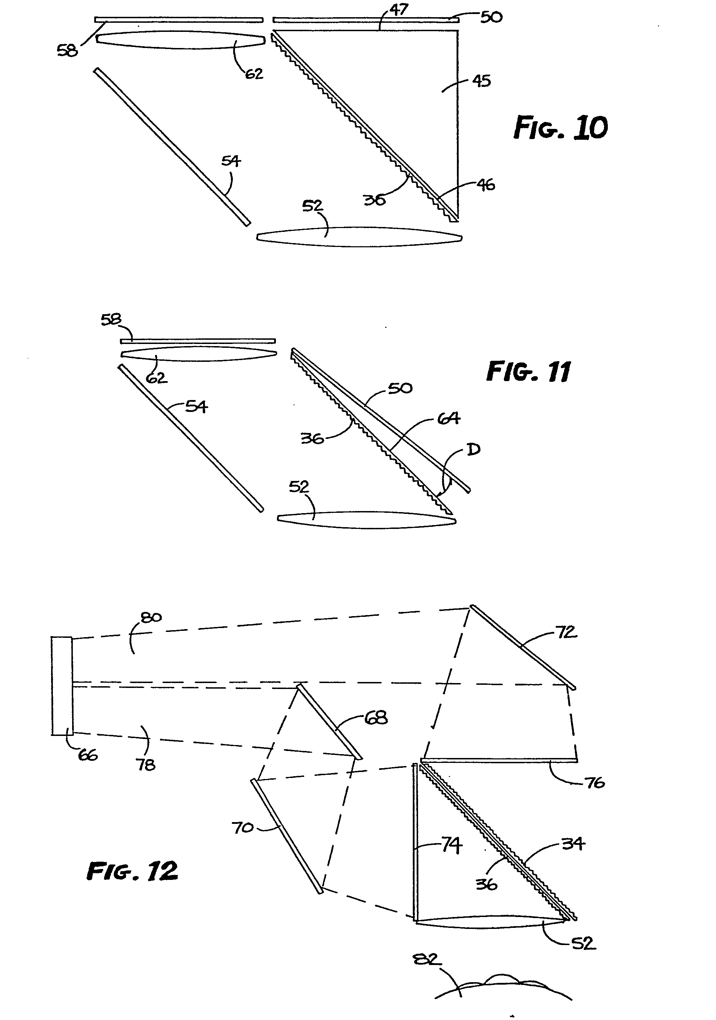

FIGURE 8 illustrates a viewing system for reversed, but non-flopped images. Left image 50 is positioned behind prisms 34 and 36, and lens 52 in a manner as previously described in FIGURES 3 and 4.

Magnification means in the form of lens 62 is positioned at an occluded angle H of approximately 45 degrees to prism array 36. Reflective means 54 and prism 36 both flop right image 58, resulting in the observance of the image in its correct orientation. Lens 62 increases the size of observed right image 58, compensating for the extended length of travel of the right line of sight 24 as compared to left line of sight 22. Should magnification lens 62 be removed, image size compensation can be attained by remote positioning of image 50, as described previously in FIGURE 5.

Continuing with FIGURE 8, it can be noted that prism 36 is positioned at an occluded angle G of approximately 45 degrees to the magnification lens 32 and the eyes of the viewer 20. This positioning may vary several degrees in all embodiments as herein stated, depending particularly upon the index of refraction of the material employed in the prism arrays. Prism 34 is not positioned parallel to prism 36 since a variance angle F of approximately 5 degrees between plano surfaces 35 and 37 reduces or eliminates any possible image ghosting which may appear to viewer 20 as a result of any images undergoing total internal reflection within a back-to-back prism array and then bouncing back and forth within the array prior to being viewed by the observer. This improvement can be used with any of the two prisms systems of the invention such as shown in FIGURES 3 to 10, 12 and 15.

Referring now to FIGURE 9, solid prism 39, can be used in substitution for either one of any thin face, grooved prism as herein described. Prism 39, as illustrated, is positioned in place of prism 36 of FIGURE 8. Side 41 of prism 39 is convex to provide magnification for both images 50 and 58, as observed by viewer 20. Side 43 of prism 39 is also convex, magnifying image 58 in the same manner as lens 62 of FIGURE 8. Prism 39, therefore, replaces three optical elements of FIGURE 8, lenses 52 and 62, and prism 36.

FIGURE 10 illustrates the system of FIGURE 8 with solid prism 45 substituted for thin prism 34. In FIGURE 10, prism 45 and prism 36 are positioned with gap 46 therebetween. Left image 50 is positioned parallel to side 47 of prism 45. Magnification lens 62 is positioned at a location between image 58 and reflective means 54, an alternative to its FIGURE 8 placement.

FIGURE 11 employs a one prism system similar to as described earlier in FIGURES 1 and 2, with the inclusion of reflective means 54 to visually flop image 58, eliminating the necessity of photographically flopping image 58 prior to use in the system. Prism 36 is the only prism in this embodiment. The orientation and positioning of elements 36, 52, 54 and 62 are identical to the FIGURE 8 embodiment. Left stereo image 50 is positioned at an occluded angle D of between 1 degree and 15 degrees to the plano surface 64 of prism 36, to minimize any prism distortion in the single prism system. Lens 52, Lens 62 and prism array 36 can be replaced by solid prism 39, as employed in FIGURE 9.

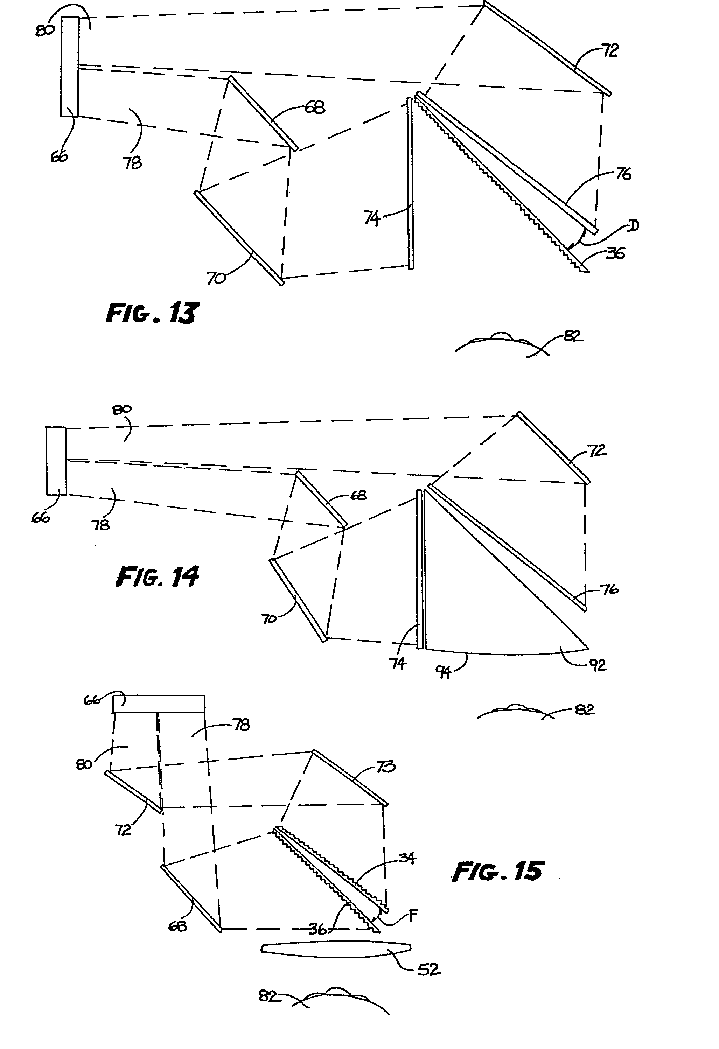

FIGURES 12, 13, 14 and 15 describe distal projection and imaging embodiments which effectively eliminate the need for special process image flopping or reversing.

Referring now to FIGURE 12, a pair of stereoscopic images, represented by projected image beams 78 and 80 are projected by distal imaging means 66. Right image beam 78 is projected onto reflective means 68 where it is flopped, or reversed, and then directed onto reflective means 70 where it is re-flopped back to its normal orientation and directed onto translucent viewing screen 74. Observer 82 views this image in a manner as described in FIGURE 4. Since image 78 is viewed on the back side of translucent screen 74, it appears flopped, but is corrected at prism 36 and therefore appears to the observer 82 in its correct orientation. Left image 80 is projected onto reflective means 72, flopped, and then directed onto translucent screen 76. Viewed through the back side of screen 76, the flopped image appears in its correct orientation. Reflective means 68, 70, 72 are positioned in such a fashion as to render the length of travel of left image 80 and right image 78 identical.

FIGURE 13 describes a projection system with image orientation basically as described in FIGURE 12, except this embodiment employs a one prism array as described in FIGURES 1 and 2. Light translucent screen 76 is positioned at an occluded angle D of approximately ten degrees in relation to the prism 36. Reflective means 68 and 70 are positioned as described in FIGURE 13. Reflective means 72 is positioned to compensate for the change in path length of right image 80 and the change in position of light translucent screen 76. It should be noted that the magnification lens 52 of FIGURE 12 is not present in the FIGURE 13 embodiment. This lens is a preferred feature for image viewing, but all embodiments of this invention will function without the inclusion of that lens.

Referring to FIGURES 13 and 14, the identical system for stereoscopic projection is illustrated except for the replacement of prism 36 in FIGURE 13 with solid prism 92 in FIGURE 14. Solid prism 92 can be employed in place of the thin prism as previously described herein to achieve a similar optical effect. One short side of prism 92 is illustrated with a convex surface 94. This convexity equips prism 92 with an integral magnification ability, thereby eliminating the need for the separate magnification means as illustrated elsewhere in this application, such as in FIGURES 8, 11 and 12. The convex face 94 is optional.

In FIGURE 15, distal imaging means 66 is non-projecting, such as in the case of a television. Viewer 82 must therefore view the stereoscopic images 78 and 80 directly, not on a remote screen as in FIGURES 12, 13, 14. It should be noted that image beams are at an opposite orientation to FIGURES 12, 13 and 14 as they exit from imaging means 66 and that since they are viewed directly without rear projection onto any translucent screens as in FIGURES 12, 13 and 14, the reflective means orientation differs from the above FIGURES 12, 13 and 14. Right image 78 is directed via reflective means 68 onto prism 36 where it is viewed through lens 52 by viewer 82. Left image 80 is directed via reflective means 72 and 73 onto prism 34, then into prism 36, where it is viewed by viewer 82 in a fashion as described in FIGURE 8. Occluded angle F of between 1 degree and 15 degrees, as described in FIGURE 8, is utilized in this embodiment to eliminate ghosting as previously explained.

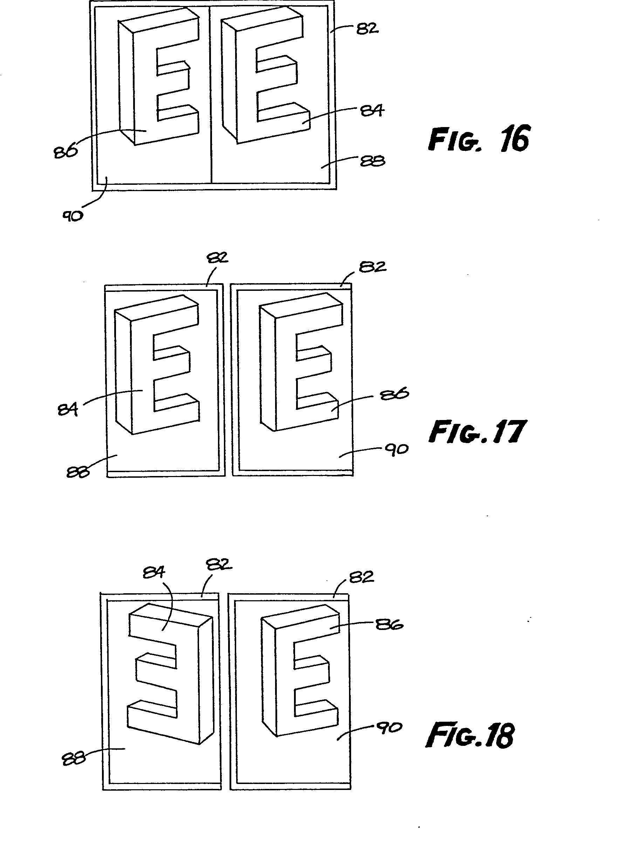

FIGURES 16, 17 and 18 demonstrate the difference in image orientation as described in this application. FIGURE 16 shows an integral unit 82 which can be a standard stereoscopic print or perhaps a split frame of a standard stereoscopic movie. Both images 84 and 86 are in their correct orientation on their respective fields of view 88 and 90. It can be observed that left image 86 is illustrated with more of the left field of view 90, while right image 84 is illustrated with more of the right field of view 88. This is the normal, natural orientation, primarily, that this invention has been concerned with.

FIGURE 17 illustrates reversed images. The left image 86 has been positioned to the right of right image 84. This is an inconvenience in orientation for usage in a viewing system, but does not present major technical problems in film developing. It does, however, require some skill in viewer usage.

FIGURE 18 shows the reversed images of FIGURE 17 plus right image 84 has now also been flopped. This presents difficulty in image processing and might discourage common usage of a stereoscopic system requiring this orientation. This is the image orientation required for use in FIGURES 1, 2, 3 and 4 which is avoided by the projection and imaging system of this invention.

-17-

Some of the inventive features may be summarized as follows:

1. A stereoscopic viewing system comprising:

a) a thin plate prism bearing, on one face, a plurality of parallel, longitudinal and laterally spaced-apart, straight line V-grooves defining a plurality of straight, longitudinal and laterally spaced-apart triangular prisms and an opposite plano face;

b) a first stereoscopic imaging surface at an occluded angle to said one face from 40 degrees to about 60 degrees; and

c) a second stereoscopic imaging surface at an occluded angle to said plano face from 1 degree to about 15 degrees; said prism and imaging surfaces lying along planes having a common intersection parallel to said grooves of said prism.

2. The stereoscopic viewing system of item 1 wherein said prism is aligned with said grooves and interspaced prisms parallel to the vertical axis of said imaging planes.

3. The stereoscopic viewing system of item 1 wherein said occluded angle between said first imaging plane and prism is about 45 degrees.

- 19 -

4.  A stereoscopic viewing system comprising:

a) a pair of thin plate prisms with back-to-back, continuous plano faces lying along a common prism plane and opposite prism faces, each prism face bearing a plurality of parallel, equally-spaced, straight-line, V-grooves defining a plurality of straight, equally-spaced triangular prisms; and

b) first and second imaging surfaces lying on first and second imaging planes positioned at substantially equal occluded angles from about 40 degrees to 60 degrees, between said prism plane and each of said imaging surfaces.

5.  The stereoscopic viewing system of item 4 wherein the occluded angles between said imaging planes and said prism plane are about 45 degrees.

6.  The stereoscopic viewing system of item 1 or 4 including a pair of side-to-side reversed stereoscopic images on said imaging surfaces.

7. A stereoscopic viewing system comprising:

a) an assembly of a pair of thin plate prisms with back-to-back plano faces and bearing a plurality of parallel, equally-spaced, straight-line, V-grooves defining a plurality of straight, equally-spaced, triangular prisms with one of said prism faces open to provide a viewing face;

b) a mirror to one side of said assembly, relative to said viewing face;

c) a first imaging surface behind said assembly, relative to said viewing face and at an angle from 40 degrees to 60 degrees to said assembly;

d) a second imaging surface in the reflected line of sight from said mirror; and

e) first and second stereoscopic images displayed, respectively, on said first and second imaging surfaces.


8. The stereoscopic viewing system of item 7 wherein said mirror has an occluded angle to said assembly of 40 degrees to 60 degrees and said second imaging plane is located to the opposite side of said assembly, relative to said mirror.

9.   The stereoscopic viewing system of item 7   wherein said mirror is parallel to said   assembly   and   said   second imaging surface is beside said first imaging surface.

10.   The   stereoscopic   viewing system of item 7 or 9 including a magnification lens located between   said   mirror and second imaging surfaces.

11.   The   stereoscopic   viewing system of item 7 or 9 including a reduction lens located in front   of   said   first imaging surface.

12.   The   stereoscopic   viewing system of item 4 or 7 wherein said   thin   plate   prisms   are   positioned   with   an occluded   angle   from   1   to   15 degrees between their plano faces.

13.   The stereoscopic viewing system of item 1, 4 or 7 including a magnification lens in front of   said   prism,   in the line of sight of a viewer thereof.

14.   The stereoscopic viewing system of item 1, 4 or 7 wherein  said V-grooves are provided at a density from about 10 to 200 per inch.

15.   The stereoscopic viewing system of item 1, 4 or 7 wherein said V-grooves are provided at a density of at least 50 per inch.

16.   The stereoscopic viewing system of item 1 or 4 with  a  stereoscopic image display of side-by-side disposed stereoscopic images and including:

a) a first mirror in the projection path of one of said images to direct said image onto one imaging surface; and

b) second and third mirrors in the projection  path  of the  other  of said images to successively reflect the other of said  images  and  direct  it  onto  the  second  imaging surface.

17. The stereoscopic viewing system comprising:

a) one or a pair of thin plate prisms as claimed in item 1 or 4

b) a first mirror in the projection path of one of said images to direct said image directly onto one prism face;

c) second and third mirrors in the projection path of the other of said images to successively reflect said other image directly onto the opposite prism face.

18. The stereoscopic viewing system of item 1, 4, 7, 16 or 17 with one solid triangular prism having a viewing face and right and left imaging faces with an apex angle between said imaging faces from 35 to 60 degrees substituted for any one thin prism.

19. The stereoscopic viewing system of item 18 wherein one or both viewing faces of said triangular prism are convex or concave for magnification or reduction.

-23

WE CLAIM:

1.  A stereoscopic viewing system comprising:

a) a thin plate prism bearing, on one face, a plurality of parallel, longitudinal and laterally spaced-apart, straight line V-grooves defining a plurality of straight, longitudinal and laterally spaced-apart triangular prisms and an opposite plano face;

b) a first stereoscopic imaging surface at an occluded angle to said one face from 40 degrees to about 60 degrees; and

c) a second stereoscopic imaging surface at an occluded angle to said plano face from 1 degree to about 15 degrees; said prism and imaging surfaces lying along planes having a common intersection parallel to said grooves of said prism.

2.  The stereoscopic viewing system of claim 1 wherein said prism is aligned with said grooves and interspaced prisms parallel to the vertical axis of said imaging planes.

3.  The stereoscopic viewing system of claim 1 wherein said occluded angle between said first imaging plane and prism is about 45 degrees.

4. A stereoscopic viewing system comprising:

a) a pair of thin plate prisms with back-to-back, continuous plano faces lying along a common prism plane and opposite prism faces, each prism face bearing a plurality of parallel, equally-spaced, straight-line, V-grooves defining a plurality of straight, equally-spaced triangular prisms; and

b) first and second imaging surfaces lying on first and second imaging planes positioned at substantially equal occluded angles from about 40 degrees to 60 degrees, between said prism plane and each of said imaging surfaces.

5. The stereoscopic viewing system of claim 4 wherein the occluded angles between said imaging planes and said prism plane are about 45 degrees.

6. The stereoscopic viewing system of claim 1 or 4 including a pair of side-to-side reversed stereoscopic images on said imaging surfaces.

7.   A stereoscopic viewing system comprising:

a) an assembly of a pair of thin plate prisms with back-to-back plano faces and bearing a plurality of parallel, equally-spaced, straight-line, V-grooves defining a plurality of straight, equally-spaced, triangular prisms with one of said prism faces open to provide a viewing face;

b) a mirror to one side of said assembly, relative to said viewing face;

c) a first imaging surface behind said assembly, relative to said viewing face and at an angle from 40 degrees to 60 degrees to said assembly;

d) a second imaging surface in the reflected line of sight from said mirror; and

e) first and second stereoscopic images displayed, respectively, on said first and second imaging surfaces.


8.   The stereoscopic viewing system of claim 7 wherein said mirror has an occluded angle to said assembly of 40 degrees to 60 degrees and said second imaging plane is located to the opposite side of said assembly, relative to said mirror.

0047800

- 26 -

9. The stereoscopic viewing system of claim 7 wherein said mirror is parallel to said assembly and said second imaging surface is beside said first imaging surface.

10. The stereoscopic viewing system of claim 7 or 9 including a magnification lens located between said mirror and second imaging surfaces.

11. The stereoscopic viewing system of claim 7 or 9 including a reduction lens located in front of said first imaging surface.

12. The stereoscopic viewing system of claim 4 or 7 wherein said thin plate prisms are positioned with an occluded angle from 1 to 15 degrees between their plano faces.

13. The stereoscopic viewing system of claim 1, 4 or 7 including a magnification lens in front of said prism, in the line of sight of a viewer thereof.

0047800

-27-

14. The stereoscopic viewing system of claim 1, 4 or 7 wherein said V-grooves are provided at a density from about 10 to 200 per inch.

15. The stereoscopic viewing system of claim 1, 4 or 7 wherein said V-grooves are provided at a density of at least 50 per inch.

16. The stereoscopic viewing system of claim 1 or 4 with a stereoscopic image display of side-by-side disposed stereoscopic images and including:

a) a first mirror in the projection path of one of said images to direct said image onto one imaging surface; and

b) second and third mirrors in the projection path of the other of said images to successively reflect the other of said images and direct it onto the second imaging surface.

0047800

- 28 -

17. The stereoscopic viewing system comprising:

a) one or a pair of thin plate prisms as claimed in claim 1 or 4;

b) a first mirror in the projection path of one of said images to direct said image directly onto one prism face;

c) second and third mirrors in the projection path of the other of said images to successively reflect said other image directly onto the opposite prism face.

18. The stereoscopic viewing system of claim 1, 4, 7, 16 or 17 with one solid triangular prism having a viewing face and right and left imaging faces with an apex angle between said imaging faces from 35 to 60 degrees substituted for any one thin prism.

19. The stereoscopic viewing system of claim 18 wherein one or both viewing faces of said triangular prism are convex or concave for magnification or reduction.

**FIG.1**

**FIG.2**

**FIG.3**

FIG. 4

22

24

20

48

50

46

34

36

52

50

FIG. 5

E  60

54

36  34

58

22  24

52

FIG. 6

50

58

62

54

52

**FIG. 7**

**FIG. 8**

**FIG. 9**

FIG. 10

FIG. 11

FIG. 12

5/6

FIG. 13

FIG. 14

FIG. 15

FIG. 16

FIG.17

FIG.18